# EUROPEAN PATENT APPLICATION

(11) **EP 2 527 165 A2**
(43) Date of publication of application: **28.11.2012**
(21) Application number: 12168876.6
(22) Date of filing: 22.05.2012
(51) Int. Cl.: B60C 11/12

(54) **Tire tread and truck tire**

(30) Priority: 26.05.2011 US 201113116350
(71) Applicant: The Goodyear Tire & Rubber Company, Akron, OH 44316-0001 (US)
(72) Inventor: Mathonet, Vincent Benoit, B-6720 Habay-la-Neuve (BE); Schyns, Christophe, B-6880 Rossart (BE); Le, Phuoc Thuan, B-6717 Attert (BE)
(74) Representative: Kutsch, Bernd

(57) **Abstract**

A tire tread comprising a central region and first and second shoulder regions adjacent the central region is disclosed. At least one of the shoulder regions comprises a circumferential array of spaced apart shoulder sipes (52, 54), each of the shoulder sipes (52, 54) having a depth in an unworn tire tread condition within a depth range of from 1 mm to 3.5 mm. Each shoulder sipe (52, 54) comprises at least one sipe segment having a longitudinal axis oriented in a substantially axial direction within a range of between +/- 20 degrees of the tire axial direction.

## Description

### Background of the Invention

The invention relates generally to a tire tread which may be used with a regional tire for a commercial truck and, more specifically, to a tread configuration for tires intended for slippery or even winter driving conditions.

### Background of the Invention

Commercial truck regional tires constructed for slippery or even winter driving conditions are intended to be suitable for running on surfaces of reduced compactness such as snow-covered roadways. Such tires are required to demonstrate suitable traction (gripping), power, braking, and handling characteristics on wet or snow covered surfaces while maintaining rolling resistance and mileage performance. The tread pattern of commercial truck regional tires must accordingly meet such competing objectives in order to provide the user with acceptable tire performance.

### Summary of the Invention

The invention relates to a tire tread in accordance with claim 1 and to a tire comprising such a tread in accordance with claim 15.

Dependent claims refer to preferred embodiments of the invention,.

In one aspect of the invention, a tire includes a circumferential tire tread having a central region and first and second shoulder regions adjacent the central region. A circumferential array of spaced apart shoulder sipes is formed within one or both of the shoulder regions, each of the shoulder sipes having a depth in an unworn tire tread condition within a depth range of from 1 mm to 3.5 mm, and each shoulder sipe having a longitudinal axis oriented in an axial direction within a range of between +/- 20 degrees of the tire axial direction.

In one aspect of the invention, the shoulder sipes may extend in an axial direction and exclusively reside in one or both of the shoulder region(s) of the tire tread. The shoulder sipes may each include a first and a second straight segment intersecting at an end-to-end intersection with respect to each other at an intersection angle. The first and second straight segments of each shoulder sipe may incline in opposite directions from the end-to-end intersection, and the end-to-end intersection, of each shoulder sipe may be located at a circumferential shoulder groove within a respective shoulder region.

In one aspect of the invention, shoulder groove fingers may alternate with the shoulder sipes along the circumferential direction of the tread in one or both of the shoulder regions in such a way that each shoulder groove finger is followed by a shoulder sipe.

In yet another aspect of the invention, shoulder groove fingers may alternate with the shoulder sipes along the circumferential direction in one or both of the shoulder regions in such a way that two or three circumferentially adjacent shoulder sipes are followed by one shoulder groove finger.

In yet another aspect of the invention, the shape of the shoulder groove fingers may correspond to or mimic the shape of the shoulder sipes, with the shoulder groove fingers however having a larger circumferential width than the shoulder sipes and/or having a larger depth in an unworn tire tread condition than the shoulder sipes.

In yet another aspect of the invention, the shoulder groove fingers may have a circumferential width of at least two times or at least three times the circumferential width of the shoulder sipes.

In yet another aspect of the invention, the shoulder groove fingers may have a depth in an unworn tire tread condition within a depth range of from 1 mm to 3.5 mm.

In yet another aspect of the invention, the shoulder groove fingers may have a depth in an unworn tire tread condition of at least 4 mm.

In yet another aspect of the invention, the shoulder groove fingers may have a circumferential width of at least 2 mm, alternatively at least 3 mm.

In yet another aspect of the invention, the shoulder sipes may have a circumferential width in a range of from 0.4 mm to 1 mm, alternatively from 0.5 to 0.5 mm.

In one aspect of the invention, the tire is a truck tire, preferably a regional truck tire.

In one aspect of the invention, the tire is a steer tire of a truck.

In one aspect of the invention, the tire is a drive tire of a truck.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Groove" means an elongated void area in a tread that may extend circumferentially or laterally about the tread in a straight, curved, or zigzag manner. Circumferentially and laterally extending grooves sometimes have common portions. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such narrow or wide grooves are substantially reduced depth as compared to wide circumferential grooves which the interconnect, they are regarded as forming "tie bars" tending to maintain a rib-like character in tread region involved.

"Lateral" means an axial direction.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction, sipes are generally narrow in width and close in the tires footprint as opposed to grooves that remain open in the tire's footprint.

### Brief Description of the Drawings

The invention will be described by way of example and with reference to the accompanying drawings in which:
FIG. 1 is an isometric view of a tire having a tire tread configured according to the invention.
FIG. 2 is a front plan view thereof.
FIG. 3 is an enlarged view of a portion of the tread taken from FIG. 2.
FIG. 4 is an enlarged fragmented front view taken from FIG. 2.
FIG. 5 is a barrel shaped foot print of the tire tread.

### Detailed Description of the Invention

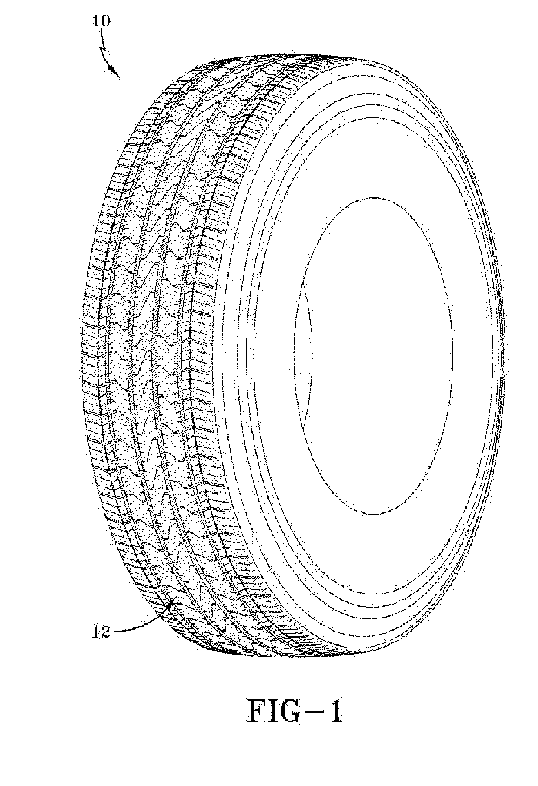

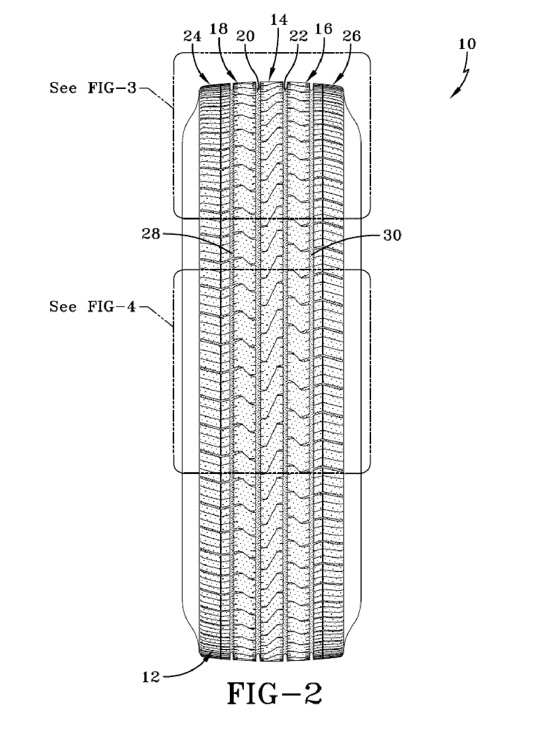

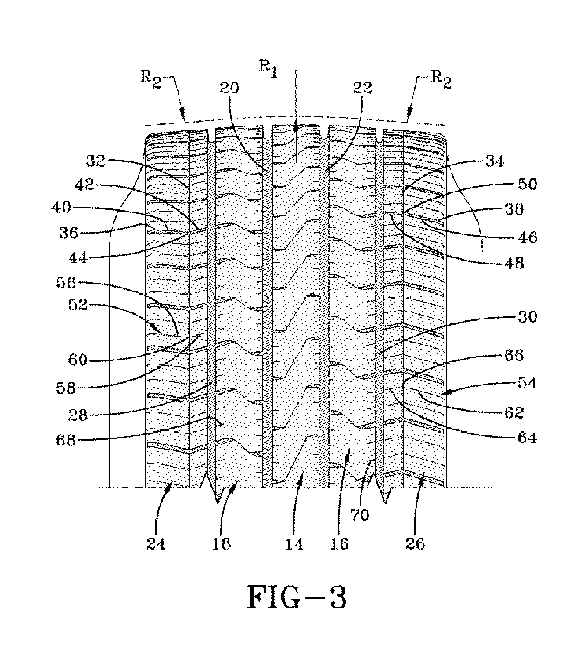

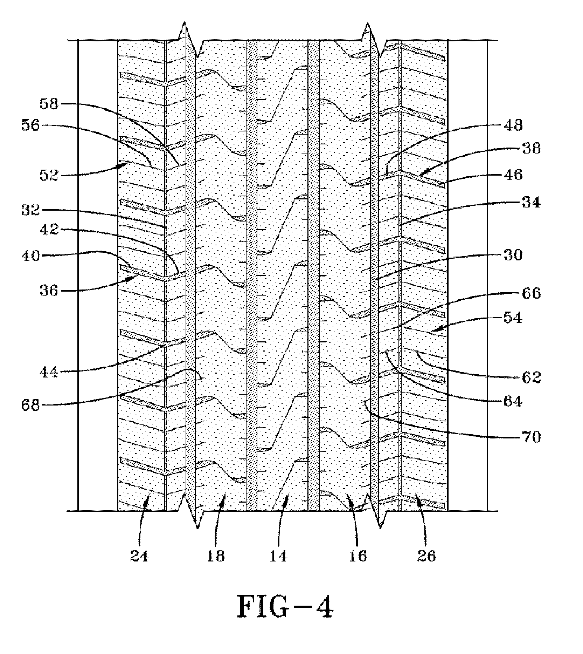

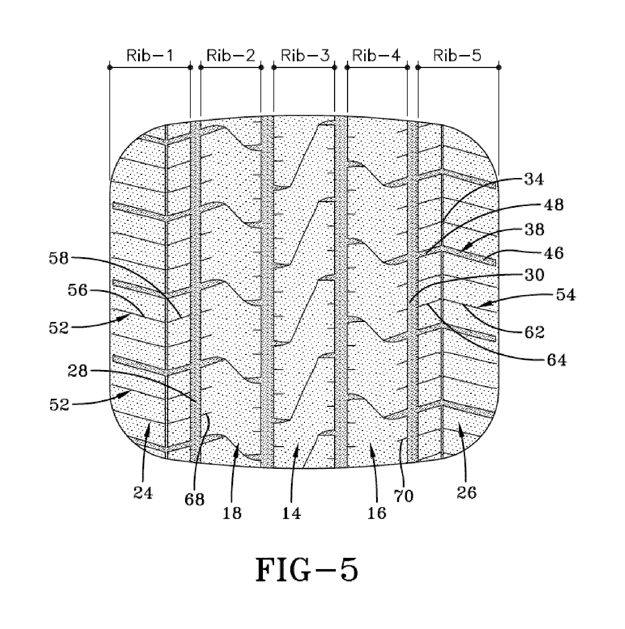

With reference to FIGS. 1 through 5, a tire 10 is constructed having a circumferential tread 12 including a center tread rib 14, a pair of intermediate ribs 16, 18 on opposite respective sides of the center rib 14 and separated from the center rib by respective circumferential grooves 20, 22. A pair of shoulder tread regions 24, 26 are positioned on opposite sides of the tread, each separated from a respective intermediate rib by a shoulder groove 28, 30. Each of the shoulder regions 24, 26 has a circumferential narrow groove 32, 34 that is proximally located to a respective groove 28, 30.

A circumferential array of spaced apart groove fingers 36, 38 extend laterally inward from opposite edges of the tread 12 across a respective shoulder region 24, 26. The lateral groove fingers 36 of the shoulder region 24 include generally straight groove segments 40, 42 that incline at an angle in opposite directions and intersect end to end at an intersection 44. The circumferential array of spaced apart groove fingers 38 of the opposite shoulder region 26 are likewise constructed having inclined straight groove segments 46, 48 angled to incline in opposite directions and intersecting at an intersection 50. The groove fingers 36, 38 generally incline in opposite respective directions and the intersections 44, 50 of groove segments in each shoulder region are in a preferred position along the narrow circumferential grooves 32, 34, respectively.

Each shoulder region 24, 26 is further constructed having a circumferential array of spaced apart lateral sipes 52, 54. The lateral sipes 52, 54 of the shoulder regions 24, 26 include generally straight sipe segments 56, 58 and 62, 64, respectively, that incline at an angle in opposite directions and intersect end to end at intersections 60,66, respectively. The sipes 52, 54 generally incline in opposite respective directions and the intersections 60, 66 of the sipes 52, 54 are in a preferred position along the narrow circumferential grooves 32, 34, respectively. Each of the sipes 52, 54 has an inward end portion 68, 70 that crosses a respective groove 32, 34 and terminates within an intermediate rib 16, 18, respectively.

It will be apparent from FIGS. 1 through 5 that the lateral siping 52, 54 resides exclusively in the shoulder regions 24, 26 in the preferred tread shown. The depth of such sipes is in a range of from 1-3.5 mm, with a preferred depth of 2-3 mm. Moreover, both of the shoulder regions 24, 26 include the array of sipes 52, 54.

The tread 12 provides a beneficial performance in a commercial vehicle, particularly in a truck steer tire. The sipes 52, 54 are configured from generally less than five straight segments such as the two segment embodiments shown. The sipes are disposed having ends 68, 70 which extend across the circumferential grooves 28, 30. In the tread 12, five (shown) or six (not shown) circumferential ribs may be deployed. Each of the sipes 52, 54 within the shoulder regions is configured from two straight parts inclined with respect to each other so as to form an intersection 60, 66, preferably at the location of the circumferential narrow grooves 32, 34. The sipes extend substantially in a lateral or axial direction at an angle in a range of +/- 20 degrees of the axial direction. The sipes 52 of the shoulder region 24 are angled and inclined in an opposite direction from the sipes 54 in the opposite shoulder region 26 and maintain a preferred constant depth of 2-3 mm along the entirety of the sipe length when the tire tread is new. The sipes 52, 54 residence within the shoulder regions 24, 26 have a preferred depth of less than 3mm. Such sipes improve the steering response of the tire if used as a commercial truck steer tire. The shoulder footprint area increases drastically when cornering. This tread part plays an important role during a cornering maneuver. The presence of biting edges in that region induces vibrations when cornering/slipping that informs the driver about the tire adherence. Deeper siping greater than 3 mm creates a risk that the sipes become the source of tread cracks or irregular wear issues such as heel and toe wear.

## Claims

1. A tire tread comprising a central region and first and second shoulder regions adjacent the central region, wherein at least one of the shoulder regions comprises a circumferential array of spaced apart shoulder sipes (52, 54), each of the shoulder sipes (52, 54) having a depth in an unworn tire tread condition within a depth range of from 1 mm to 3.5 mm, and wherein each shoulder sipe (52, 54) comprises at least one sipe segment having a longitudinal axis oriented in a substantially axial direction within a range of between +/- 20 degrees of the tire axial direction.

2. The tire tread of claim 1, wherein the shoulder sipes (52, 54) reside exclusively within one of the shoulder regions of the tire tread (12).

3. The tire tread of claim 1, wherein the shoulder sipes (52, 54) reside exclusively within both the first and the second shoulder regions of the tire tread (12).

4. The tire tread of at least one of the previous claims, wherein the shoulder sipes (52, 54) each comprise a plurality of end-to-end straight sipe segments (56, 58, 62, 64).

5. The tire tread of claim 4, wherein the number of straight sipe segments (56, 58, 62, 64) within each shoulder sipe (52, 54) is less than five, preferably two or three.

6. The tire tread of at least one of the previous claims, wherein each shoulder sipe (52, 54) extends across a circumferential shoulder groove (32, 34) within a respective shoulder region, the circumferential shoulder groove (32, 34) preferably having an axial width of from 1 mm to 5 mm or from 2 to 4 mm.

7. The tire tread of at least one of the previous claims, wherein the tire tread (12) comprises of five, six, seven or eight circumferential ribs, and wherein adjacent ribs are separated by a circumferential groove (44, 20, 22, 28, 30, 34).

8. The tire tread of at least one of the previous claims, wherein each shoulder sipe (52, 54) has at least a first straight segment (58, 64) and a second straight segment (56, 62) intersecting at an end-to-end intersection (60, 66) with respect to each other at an intersection angle.

9. The tire tread of claim 8, wherein the first straight segment (58, 64) and the second straight segment (60, 66) of each shoulder sipe (52, 54) incline in opposite directions from the end-to-end intersection (60, 66).

10. The tire tread of claim 8 or 9, wherein the end-to-end intersection (60, 66) of each shoulder sipe (52, 54) is located at a circumferential shoulder groove (32, 34).

11. The tire tread of at least one of the previous claims, wherein the shoulder sipes (52) of the first shoulder region are inclined in an opposite direction than the shoulder sipes (54) in the second shoulder region.

12. The tire tread of at least one of the previous claims, wherein each of the shoulder sipes (52, 54) has a depth in an unworn tire tread condition within a depth range of from 2 mm to 3 mm.

13. The tire tread of at least one of the previous claims, wherein each sipe segment of the shoulder sipes (52, 54) has a longitudinal axis oriented in a substantially axial direction within a range of between +/- 20 degrees, alternatively +/- 15 degrees or +/-10 degrees, of the tire axial direction.

14. The tire tread of at least one of the previous claims, wherein one or both of the first and second shoulder regions comprise a circumferential array of spaced apart shoulder groove fingers (36, 38) wherein each shoulder groove finger (36, 38) has a longitudinal axis oriented in a substantially axial direction within a range of between +/- 20 degrees.

15. A tire, preferably a truck tire, comprising a tread (12) in accordance with at least one of the previous claims.
